# EUROPÄISCHE PATENTSCHRIFT

(11) **EP 1 255 098 B1**
(45) Veröffentlichungstag und Bekanntmachung des Hinweises auf die Patenterteilung: **15.12.2004**
(21) Anmeldenummer: 02009439.7
(22) Anmeldetag: 25.04.2002
(51) Int. Cl.: G01L 9/00

(54) **Übertragungsflüssigkeit für die Druckmesstechnik und deren Anwendung**
Transfer fluid for pressure measurement and its application
Fluide à transfert pour la mesure de pression et son application

(30) Priorität: 27.04.2001 DE 20107260 U
(43) Veröffentlichungstag der Anmeldung: 06.11.2002
(73) Patentinhaber: WIKA Alexander Wiegand GmbH & Co.KG, 63911 Klingenberg/Main (DE)
(72) Erfinder: Becker, Roman, 63911 Klingenberg (DE); Kalisch, Abrecht, 63928 Eichenbühl (DE); Pleyer, Jürgen, 63811 Stockstadt (DE); Petter, Peter, 63920 Grossheubach (DE)
(74) Vertreter: Leson, Thomas Johannes Alois, Dipl.-Ing.

(56) Entgegenhaltungen:
- EP-A- 0 794 197
- US-A- 5 212 989

## Beschreibung

Die Erfindung betrifft die Verwendung von Polyalphaolefin als Druckübertragungsflüssigkeit, auch als Füllflüssigkeit bezeichnet, insbesondere in Druckmittlern und elektrischen Druckmessumformern.

Ein elektrischer Druckmessumformer hat üblicherweise eine Sensormembran und eine Trennmembran, die zusammen mit einem Gehäuse einen geschlossenen Raum begrenzen, der zur Druckübertragung mit einer Übertragungsflüssigkeit oder Füllflüssigkeit gefüllt ist. Manche Sensorelemente, wie z.B. piezoresistive Sensorelemente, deren Siliziummembranen und elektrische Kontaktierungen der Sensorelemente in der Regel nicht gegen den Messstoff beständig sind, müssen von dem Messstoff getrennt werden, um eine Beschädigung des Sensorelements zu verhindern.

Ferner ist häufig auch dann ein Kontakt des Messstoffs mit der Sensormembran nicht wünschenswert, wenn die Sensormembran z.B. Bestandteile enthält, die dem Messstoff Schaden zufügen können. Aus diesem Grund ist der Einsatz einer Trennmembran eine Vorgehensweise, um diese o.g. Beeinträchtigungen sicher zu vermeiden. Die zu messenden Drücke des Messstoffs verformen die Trennmembran und die praktisch inkompressible Übertragungsflüssigkeit überträgt, wegen der vollständigen Füllung des von der Trennmembran und der Sensormembran begrenzten Raums, die Auslenkung der Trennmembran im Wesentlichen unverändert auf die Sensormembran. Dadurch kann der Druck im Messstoff gemessen werden, ohne dass die Sensormembran unmittelbaren Kontakt mit dem Messstoff hat.

Ein ähnliche Überlegung liegt der Anwendung von Druckmittlern zugrunde, die zwischen den Messstoff und ein Druckmessgerät geschaltet werden, um einen unmittelbaren Kontakt von Messstoff und Messgerät zu vermeiden, d.h. das Messgerät ist physikalisch vom Messstoff getrennt und das zu messende Signal wird auf hydraulischem Weg zum Messgerät übertragen. Druckmittler sind beispielsweise Bestandteile chemischer Prozessanlagen und bilden die direkt vor Ort die Messgröße aufnehmende Komponente einer komplexen bis zum Signalverarbeitungsprozessor bestehende Messanordnung und haben üblicherweise eine Membran oder ein anderes einer Druckdifferenz folgend verformbares Element, das einerseits von dem Messstoff und andererseits mit der Druckübertragungsflüssigkeit beaufschlagt ist. Durch diese Medientrennung werden nicht nur wechselseitige Kontamination mit dem Messstoff, sondern auch schädigende Temperaturen, Drücke und chemische Reaktionen auf den Prozessor vermieden, um damit die Verfahrenssicherheit zu gewährleisten.

Bei Messgeräten und deren Peripherie jedweder Art, also auch Druckmessumformern und Druckmittler-Messanordnungen, ist man grundsätzlich bestrebt, ein möglichst genau, oder zumindest mit gleichbleibenden Abweichungen, messendes Gerät zu verwenden. Dies kann zum einen durch konstruktive Maßnahmen am Gerät oder seiner Peripherie, zum anderen auch durch eine gute Anpassung der verwendeten Materialien oder des Messgeräts insgesamt an die zu erwartenden Messwerte und die Einsatzumgebung erreicht werden.

Druckmessumformer und Druckmittler werden verbreitet zur Druckmessung in einer Vielzahl verschiedenster Anwendungen und Verfahren in verschiedensten Industrien wie zuvor schon beispielsweise erwähnt und Lebensbereichen verwendet. Folglich gibt es eine sehr große Anzahl verschiedener Einsatzbereiche von Druckmessumformern und Druckmittlern, insbesondere hinsichtlich der zu messenden Drücke als auch hinsichtlich der Temperaturen der Messstoffe bzw. der Einsatzumgebung. Ebenso gibt es eine Anzahl besonderer Anwendungen, wie z.B. in der Lebensmittelindustrie, die hohe Anforderungen an die physiologische Unbedenklichkeit der in der Anlagen- und Messtechnik verwendeten Materialien stellt.

Diese jeweiligen Spezialanforderungen an die Druckmessumformer und Druckmittler haben zu einer großen Varianten-Vielfalt besonders angepasster Ausführungen geführt, die insbesondere im Hinblick auf die Bevorratung (Lagerhaltung von Teilen und Fertigprodukten), die Fertigungssteuerung und die Auslieferung große Sorgfalt erfordert, wodurch zusätzliche Kosten entstehen.

Für die Lebensmittelindustrie dürfen in der Anlagentechnik nur zugelassene Stoffe verwendet werden; dies betrifft auch die Übertragungsflüssigkeit in o.g. Druckmessumformern und Druckmittlern. Folglich haben sich Weißöle, die physiologisch unbedenklich sind, als Übertragungsflüssigkeit für Druckmessumformer und Druckmittler für die Lebensmittelindustrie durchgesetzt.

An die Übertragungsflüssigkeit sind eine Vielzahl technischer Anforderungen, insbesondere hinsichtlich der Kompressibilität und der Viskosität einschließlich der Temperaturabhängigkeit dieser Größen, des Dampfdrucks, der Temperaturbeständigkeit, der Alterungsbeständigkeit, der Materialverträglichkeit mit dem Sensorelement, der Toxizität etc., gestellt. Folglich gibt es für die jeweiligen Einsatzbedingungen der Druckmessumformer und Druckmittler eine besonders geeignete Übertragungsflüssigkeit, d.h. es ist stets die Anpassung an den Verwendungszweck, das Einsatzgebiet, die Einsatzbedingungen und dergleichen bei der Zusammenstellung von Druckmessumformer bzw. Druckmittler mit der passenden Übertragungsflüssigkeit erforderlich. Es gibt jedoch zudem besondere Anpassungserfordernisse, die mit den bisherigen Übertragungsflüssigkeiten zu keinen befriedigenden technischen Lösungen führten.

Beispielsweise ist die Verwendung von in der Lebensmittelindustrie gebräuchlichen Weißölen in niedrigen Temperaturbereichen schwierig, da dessen Viskosität mit abnehmender Temperatur deutlich zunimmt. Für Anwendungen außerhalb der Lebensmittelindustrie bei niedrigen Temperaturen hat sich Silikonöl als Übertragungsflüssigkeit durchgesetzt, jedoch ist dieses beispielsweise für Lebensmittelanwendungen nicht zugelassen.

Es gibt ferner Anwendungen, neben denen in der Lebensmittelindustrie, die ebenfalls silikonfreie Übertragungsflüssigkeiten auch bei niedrigen Temperaturen fordern; für diese Anwendungen gab es bisher keine praktikable Lösung.

Die EP-A-0 794 197 beschreibt eine direkte Verwendung von bestimmten Polyalphaolefinen in Lebensmitteln, sowie zum Ölen von in der Lebensmittelindustrie eingesetzten Maschinen.

Der Erfindung liegt die Aufgabe zugrunde, eine Übertragungsflüssigkeit für Druckmessumformer und Druckmittler zu finden, die einen breiten Einsatztemperaturbereich abdeckt und zudem für den Einsatz in der Lebensmittelindustrie geeignet ist.

Diese Aufgabe wird durch die Verwendung von Polyalphaolefin als Übertragungsflüssigkeit gemäß Anspruch 1 sowie einen elektrischen Druckmessumformer gemäß Anspruch 7 und einen Druckmittler gemäß Anspruch 16 gelöst.

Erfindungsgemäß wird als Übertragungsflüssigkeit ein Polyalphaolefin verwendet, das von der Lebensmittelgesetzgebung zugelassen ist. Das Polyalphaolefin als Übertragungsflüssigkeit bleibt auch in einem Einsatztemperaturbereich anwendbar, in dem bisher Silikonöl verwendet werden musste.

Folglich kann ein solcher Druckmessumformer oder ein Druckmittler, der mit dieser Übertragungsflüssigkeit arbeitet nicht nur erfolgreich im Lebensmittelbereich und dort bei allen üblichen Temperaturen, sondern auch in anderen Industriezweigen bei Temperaturen eingesetzt werden, bei denen das herkömmliche Weißöl nicht mehr anwendbar ist.

Somit kann die gleiche Übertragungsflüssigkeit in einem weiten Anwendungsbereich einschließlich der Lebensmittelindustrie dort eingesetzt werden, wo zuvor verschiedene Übertragungsflüssigkeiten verwendet wurden. Folglich ist die Variantenvielfalt an Druckmessumformern, die bereits in der Fertigung gefüllt werden, deutlich vermindert, wodurch erhebliche Kosteneinsparungen in der Fertigungssteuerung, der Lagerhaltung und der Auslieferung erzielt werden können.

Ebenso genügt die Bereitstellung einer Übertragungsflüssigkeit bei einer Vielzahl von Anwendungen und Bauformen von Druckmittlern, die erst im mit dem Messgerät verbundenen Zustand gefüllt werden.

Mit der gefundenen Übertragungsflüssigkeit ist also nicht nur das Problem gelöst worden, im Lebensmittelindustriebereich bei tiefen Temperaturen zuverlässiger und genauer messen zu können, sondern es ist zudem die Variantenvielfalt und der damit einhergehende Aufwand vermindert.

Nachfolgend werden Anwendungsbeispiele der erfindungsgemäß aufgefundenen Druckübertragungsflüssigkeit in einem Druckmessumformer und in einem Druckmittler unter Bezugnahme auf die Zeichnung im Einzelnen erläutert. Es zeigt
Fig. 1 eine Schnittansicht eines piezoresistiven Druckmessumformers;
Fig. 2 eine Detailansicht aus Fig. 1 in einer Schnittdarstellung; und
Fig. 3 eine Schnittansicht eines Membranruckmittlers mit angebautem Messgerät.

Bevor jedoch auf den Druckmessumformer bzw. den Druckmittler im Einzelnen eingegangen wird, sind nachfolgend in Tabelle 1 die wesentlichen Eigenschaften der Übertragungsflüssigkeit zusammengestellt.

| Materialbezeichnung | Polyalphaolefin | |
|---|---|---|
| Kurzbezeichnung | PAO 6 | |
| Erscheinungsbild | klar | |
| Viskosität bei 40°C | 29,0 bis 32,9 | mm²/s |
| Viskosität bei 100°C | 5,7 bis 6,1 | mm²/s |
| Flammpunkt | mind. 215 | °C |
| Dichte bei 15°C | 810 bis 840 | kg/m³ |
| Stock- oder Fließpunkt | max. -60 | °C |
| Gesamtsäuregehalt | max. 0,05 | mg KOH/g |

Das Polyalphaolefin ist von der US-amerikanischen Food and Drug Administration (FDA) als unbedenklich für den Einsatz in der Lebensmitteltechnologie zugelassen und kann folglich in Druckmessumformern und Druckmittlern für die Lebensmittelindustrie eingesetzt werden.

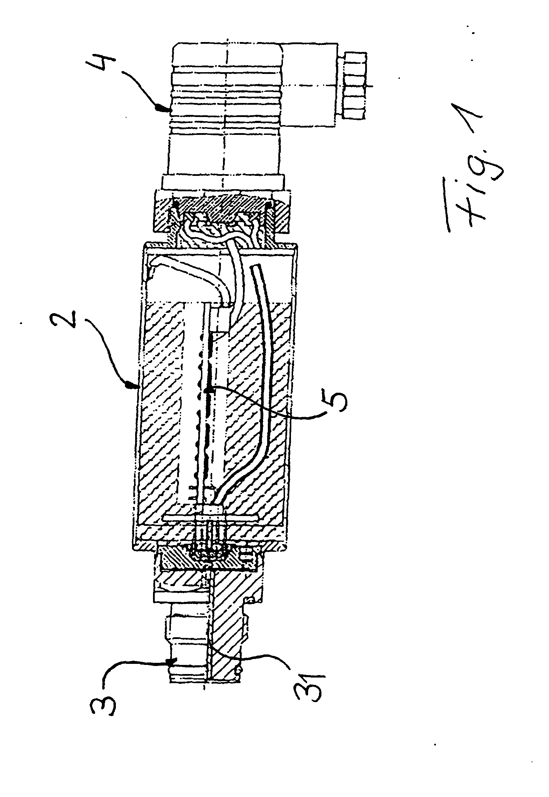

Der in Fig. 1 in einer Schnittansicht gezeigte Druckmessumformer hat ein allgemein mit 2 bezeichnetes Außengehäuse, das an einem Ende einen Druckanschluss 3 trägt und am anderen Ende mittels eines Steckers 4, der als elektrischer Anschlussverbinder dient, mit weiteren Messwerterfassungseinrichtungen (nicht gezeigt) verbunden ist. Diese Messwerterfassungseinrichtungen umfassen auch eine Stromversorgung für den Druckmessumformer.

In dem Außengehäuse 2 ist ferner eine Signalaufbereitungselektronik 5 angeordnet, die mit dem elektrischen Anschlussverbinder 4 einerseits und einem Sensorelement 1 andererseits verbunden ist. Der Druckanschluss 3 ist von einem Kanal 31 durchgriffen, der von der Spitze des Druckanschlusses 3 zum Sensorelement 1 führt. Der Kanal 31 kann auf der Seite des Druckanschlusses 3 an der Spitze des Druckmessumformers zusätzlich mit einer frontbündigen Membran (nicht gezeigt) versehen sein, die den Kanal 31 vom Messstoff trennt. Diese Vorgehensweise ist beispielsweise bei aggressiven, oder auch bei mit Feststoffen versetzten Messstoffen vorteilhaft. In diesem Fall ist der Kanal 31 mit Übertragungsflüssigkeit gefüllt.

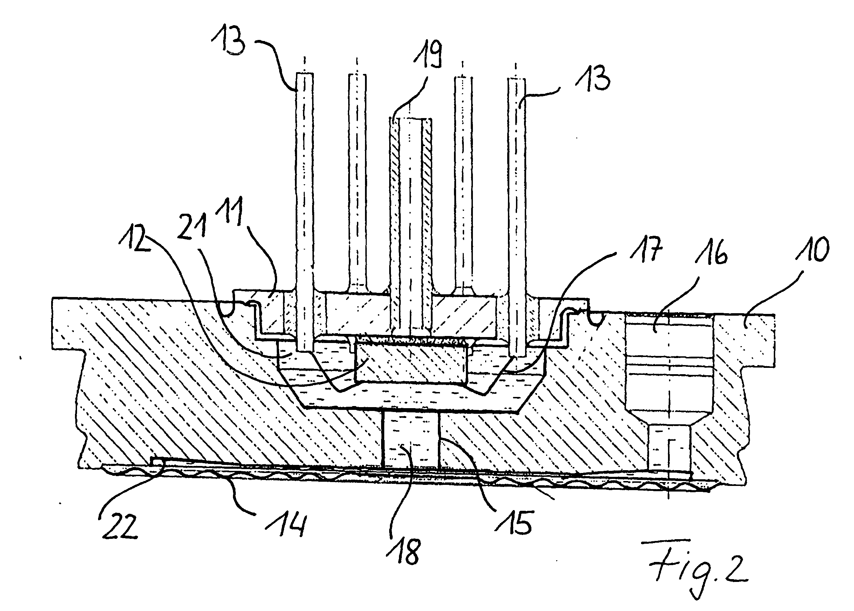

Das Sensorelement 1 ist in Fig. 2 in einer vergrößerten Schnittansicht gezeigt. Das Sensorelement 1 hat Gehäuse oder einen Ringkörper 10 mit einer gestuften Bohrung, die von einem Sensorträger 11 dicht verschlossen ist, um einen ersten Raum 21 auszubilden. Der Sensorträger 11 hält ein piezoelektrisches Sensorbauteil 12, das fest daran angebracht und über Drähte 17 elektrisch leitend mit Kontakten 13 verbunden ist, die dicht und elektrisch isoliert in den Sensorträger 11 eingesetzt sind.

Am unteren Ende des Ringkörpers ist eine Membran 14 randseitig dicht befestigt. Die Membran 14 und der Ringkörper 10 begrenzen einen zweiten Raum 22, der über einen Kanal 15 der gestuften Bohrung des Ringkörpers 10 mit dem von dem Ringkörper 10 und dem Sensorträger 11 begrenzten ersten Raum 21 in Verbindung steht. Wie mit Bezugszeichen 18 angedeutet ist, sind die beiden vorgenannten Räume 21 und 22 sowie der Kanal 15 mit der Übertragungsflüssigkeit hohlraumfrei gefüllt. Somit bewirkt eine Lageänderung oder Auslenkung der Membran 14 eine Volumenverschiebung eines Flüssigkeitsvolumens von dem Raum 22 in den Raum 21 oder umgekehrt, wodurch die Siliziummembran (nicht gezeigt) des Sensorbauteils 12 ausgelenkt wird und ein elektrisch erfassbares Signal liefert. Eine auf der Rückseite des Sensorbauteils 12 angeordnete, den Ringkörper 10 durchdringende Differenzdruckleitung 19 steht üblicherweise mit der Umgebung in Verbindung und gestattet die Auslenkung der Siliziummembran (nicht gezeigt) des Sensorbauteils 12.

Zur hohlraumfreien Befüllung des Sensorelements 1 mit der Übertragungsflüssigkeit ist ferner eine verschließbare Stopfenaufnahme 16 im Ringkörper 10 ausgebildet, die gemäß Fig. 2 in den zweiten Raum 22 mündet. Zur Befüllung wird das Sensorelement 1 in einen Behälter gelegt und der Behälter wird dann evakuiert. Danach wird der Behälter mit Übertragungsflüssigkeit geflutet und die Übertragungsflüssigkeit dringt hohlraumfrei in die Räume 21 und 22 sowie den Kanal 15 des Sensorelements 1 ein und füllt diese aus. Danach wird die Stopfenaufnahme 16 mit einem passenden Stopfen (nicht gezeigt) dicht verschlossen.

Der Vollständigkeit halber ist noch zu erwähnen, dass der Ringkörper 10 an der der Membran 14 zugewandten Seite ein Membranbett aufweist, an das sich die Membran bei Überschreiten der zulässigen Messdrücke anlegen kann, um ein Überdehnen oder einen Bruch der Membran zu vermeiden.

In einer nicht näher gezeigten weiteren Anwendungsform der erfindungsgemäß aufgefundenen Übertragungsflüssigkeit Polyalphaolefin in einem elektrischen Druckmessumformer kann das Sensorelement auch ein Dünnfilmsensorelement sein, das in Dünnfilmtechnik auf eine Sensormembran aufgebracht ist, die in der Regel aus Edelstahl besteht. In diesem Fall ist die Trennmembran am Ringkörper wegen der guten Medienbeständigkeit von Edelstahl nicht zwingend erforderlich. Jedoch ist bei vielen Anwendungen die sog. frontbündige Membran an der Spitze des Druckanschlusses des Druckmessumformers vorgesehen, so dass dann der Raum zwischen der Sensormembran und der frontbündigen Membran mit der Übertragungsflüssigkeit gefüllt werden muss, um einen funktionsfähigen Druckmessumformer zu erhalten. Die frontbündige Membran kann auch am Druckanschluss eines piezoresistiven Druckmessumformers vorgesehen sein, dann sind die von den Membranen begrenzten Räume ebenfalls mit Übertragungsflüssigkeit zu füllen.

Eine weitere Anwendung der Übertragungsflüssigkeit Polyalphaolefin ist die Befüllung von Druckmittlern. Druckmittler sind in Membran-, Zungen- oder Rohrbauweise verfügbar.

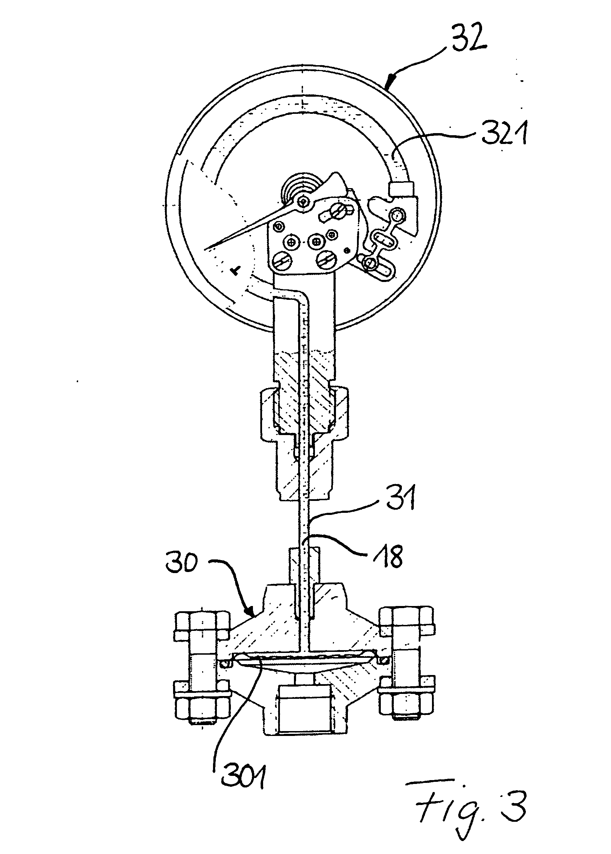

Fig. 3 zeigt in einer schematischen Schnittansicht einen Membrandruckmittler 30, der über eine Kapillarleitung 31 mit einem Messgerät 32 verbunden ist. Die Membran 301 wird von der in Fig. 3 unteren Seite mit dem Messstoff beaufschlagt und entsprechend ausgelenkt. Die Volumenveränderung des von der Membran 301 im Druckmittler 30 begrenzten Raums bewirkt eine Verschiebung eines entsprechenden Volumens an Übertragungsflüssigkeit 18 durch die Kapillarleitung 31 in das Messelement 321 (eine Rohrfeder) des Messgeräts 32. Das Messelement wird entsprechend der Volumenänderung verformt und die Verformung wird mittels eines Zeigerwerks ablesbar angezeigt. Die Kapillarleitung kann auch als Fernleitung dienen, wenn der Druckmittler und das Messgerät aus technischen, sicherheitsrelevanten oder organisatorischen Gründen voneinander entfernt angeordnet werden. In diesem Fall ist kommt der Viskosität der Übertragungsflüssigkeit besondere Bedeutung zu, da die Geschwindigkeit der Volumenverschiebung durch die Kapillarleitung, die dann als Fernleitung dient, die Ansprechgeschwindigkeit des Messgeräts maßgeblich mitbeeinflusst. Hierbei kann sich die Viskosität sich wegen der unterschiedlichen Temperaturen am Messpunkt (Messstofftemperatur) und am Ablesepunkt (Umgebungstemperatur) ändern, die Viskositätsänderungen bei Polyalphaolefin sind jedoch ausreichend gering, um mit der Übertragungsflüssigkeit gute Ergebnisse zu erzielen.

Wie in Fig. 3 zu erkennen ist, ist auch das Messgerät mit der Übertragungsflüssigkeit gefüllt. Die nichtkorrosiven Eigenschaften der Übertragungsflüssigkeit Polyalphaolefin sind folglich auch hier von Vorteil und schützen das Messgerät.

Mit der erfindungsgemäß aufgefundenen Übertragungsflüssigkeit lässt sich eine Vielzahl von Messaufgaben erfüllen, wobei die jeweilige Typenvielfalt von Druckmessumformern oder von jeweils verschieden gefüllten Druckmittlern auf eine geringere Auswahl reduziert werden kann. Dadurch können insbesondere die Fertigungsüberwachung, die Geräteauswahl und die Lagerhaltung vereinfacht werden. Zudem ist Polyalphaolefin ungiftig, so dass auch die Handhabung der Übertragungsflüssigkeit in der Fertigung, der Montage und der Installation vereinfacht ist.

## Patentansprüche

1. Verwendung von Polyalphaolefin (PAO 6) als Übertragungsflüssigkeit, die Auslenkungen eines Trennelements zwischen einem Messstoff und der Übertragungsflüssigkeit auf eine Druckmesseinrichtung überträgt, insbesondere in elektrischen Druckmessumformern und Druckmittlern.

2. Verwendung von Polyalphaolefin (PAO 6) als Übertragungsflüssigkeit nach Anspruch 1, wobei die Viskosität der Übertragungsflüssigkeit 29,0 bis 32,9 mm²/s bei 40°C und 5,7 bis 6,1 mm²/s bei 100°C beträgt.

3. Verwendung von Polyalphaolefin (PAO 6) als Übertragungsflüssigkeit nach Anspruch 1 oder 2, wobei die Dichte der Übertragungsflüssigkeit bei 15°C 810 bis 840 kg/m³ beträgt.

4. Verwendung von Polyalphaolefin (PAO 6) als Übertragungsflüssigkeit nach Anspruch 1, 2 oder 3, wobei der Flammpunkt der Übertragungsflüssigkeit mindestens 215°C beträgt.

5. Verwendung von Polyalphaolefin (PAO 6) als Übertragungsflüssigkeit nach einem oder mehreren der Ansprüche 1 bis 4, wobei der Fließpunkt der Übertragungsflüssigkeit mindestens -60°C beträgt.

6. Verwendung von Polyalphaolefin (PAO 6) als Übertragungsflüssigkeit nach einem oder mehreren der Ansprüche 1 bis 5, wobei der Gesamtsäuregehalt der Übertragungsflüssigkeit maximal 0,05 mgKOH/g beträgt.

7. Elektrischer Druckmessumformer mit
einem in einem Gehäuse (10) angebrachten Sensorelement (1), das die Verformung einer dem Sensorelement (1) zugeordneten Sensormembran zur Messung eines an einem Druckanschluss (3) herrschenden Drucks in ein elektrisch erfassbares Signal verwandelt, und
einer Trennmembran (14), die in dem Gehäuse (10) einen geschlossenen Raum (15, 21, 22, 31) zwischen sich und der Sensormembran begrenzt,
**dadurch gekennzeichnet, dass**
der geschlossene Raum (15, 21, 22, 31) zur Übertragung einer Auslenkung der Trennmembran (14) auf die Sensormembran mit Polyalphaolefin (PAO 6) als Übertragungsflüssigkeit (18) gefüllt ist.

8. Druckmessumformer nach Anspruch 7, **dadurch gekennzeichnet, dass** die Trennmembran eine frontbündige Membran ist, die den Druckmessumformer auf der Druckanschlussseite flächenbündig und totraumfrei gegenüber dem Messstoff abschließt.

9. Druckmessumformer nach Anspruch 7, **dadurch gekennzeichnet, dass** die Trennmembran eine in das Gehäuseinnere versetzte Membran (14) ist, so dass die Druckanschlussseite des Druckmessumformergehäuses einen zu der Trennmembran führenden Messstoffkanal (31) ausbildet.

10. Druckmessumformer nach Anspruch 7, 8 oder 9, **dadurch gekennzeichnet, dass** das Sensorelement ein piezoresistives Sensorbauteil (12) ist.

11. Druckmessumformer nach Anspruch 7, 8 oder 9, **dadurch gekennzeichnet, dass** das Sensorelement ein Dünnfilm-Sensorbauteil ist.

12. Druckmessumformer nach einem oder mehreren der vorhergehenden Ansprüche 7 bis 11, **dadurch gekennzeichnet, dass** die Sensormembran eine Kreismembran ist.

13. Druckmessumformer nach einem oder mehreren der vorhergehenden Ansprüche 7 bis 11, **dadurch gekennzeichnet, dass** die Sensormembran eine Kreisringmembran ist.

14. Druckmessumformer nach einem oder mehreren der vorhergehenden Ansprüche, **dadurch gekennzeichnet, dass** die Trennmembran (14) eine gewellte Membran ist.

15. Druckmessumformer nach einem oder mehreren der vorhergehenden Ansprüche, **dadurch gekennzeichnet, dass** das Druckmessumformergehäuse (2) ferner eine Signalaufbereitungselektronik (5) und elektrische Anschlussverbinder (4) aufweist.

16. Druckmittler (30) mit
einem Gehäuse, das ein unter Druck elastisch verformbares Trennelement (301) trägt, dessen eine Seite einem Messstoff zugewandt ist und dessen andere Seite einem Raum zugewandt ist, der mit einem Messgerät (32) verbindbar ist,
**dadurch gekennzeichnet, dass**
der von dem Druckmittlergehäuse, dem Trennelement (301) und dem Messgerät (32) begrenzte Raum mit Polyalphaolefin (PAO 6) als Übertragungsflüssigkeit (18) gefüllt ist, um eine Auslenkung des Trennelements (301) auf das Messgerät zu übertragen.

17. Druckmittler nach Anspruch 16, **dadurch gekennzeichnet, dass** das Trennelement eine randseitig am Gehäuse befestigte Membran (301) ist.

18. Druckmittler nach Anspruch 16 oder 17, **dadurch gekennzeichnet, dass** das Trennelement eine randseitig am Gehäuse befestigte doppellagige Membran mit einer dazwischen angeordneten Siebeinlage ist.

19. Druckmittler nach einem oder mehreren der vorhergehenden Ansprüche 16 bis 18, **dadurch gekennzeichnet, dass** das Trennelement eine Kreismembran ist.

20. Druckmessumformer nach einem oder mehreren der vorhergehenden Ansprüche 16 bis 18, **dadurch gekennzeichnet, dass** das Trennelement eine Kreisringmembran ist.

21. Druckmessumformer nach einem oder mehreren der vorhergehenden Ansprüche 16 bis 18, **dadurch gekennzeichnet, dass** das Trennelement eine gewellte Membran ist.

22. Druckmittler nach einem oder mehreren der vorhergehenden Ansprüche 16 bis 21, **dadurch gekennzeichnet, dass** das Gehäuse ein Membranbett zur Abstützung der Membran hat.

## Claims

1. Use of polyalphaolefin (PAO 6) as transmission fluid transmitting the displacements of a separating element between a gauged substance and the transmission fluid to a pressure gauging device, particularly in electrical pressure transducers and pressure transmitters.

2. Use of polyalphaolefin (PAO 6) as transmission fluid according to Claim 1, wherein the viscosity of the transmission fluid is 29.0 to 32.9 mm²/s at 40°C and 5.7 to 6.1 mm²/s at 100°C.

3. Use of polyalphaolefin (PAO 6) as transmission fluid according to Claim 1 or Claim 2, wherein the density of the transmission fluid is 810 to 840 kg/m³ at 15°C.

4. Use of polyalphaolefin (PAO 6) as transmission fluid according to Claims 1, 2 or 3, wherein the flash point of the transmission fluid is at least 215°C.

5. Use of polyalphaolefin (PAO 6) as transmission fluid according to one or more of Claims 1 to 4, wherein the pour point of the transmission fluid is at least -60°C.

6. Use of polyalphaolefin (PAO 6) as transmission fluid according to one or more of Claims 1 to 5, wherein the the total acid content of the transmission fluid is not more than 0.05 mgKOH/g.

7. Electrical pressure transducer with
a sensor element (1) which is fitted in a casing (10) and converts the deformation of a sensor diaphragm assigned to the sensor element (1) for gauging a pressure present at a pressure connection (3) into an electrically detectable signal, and
a separating diaphragm (14) bounding an enclosed space (15, 21, 22, 31) between itself and the sensor diaphragm inside the casing (10),
**characterized in that**
the enclosed space (15, 21, 22, 31) is filled with polyalphaolefin (PAO 6) as transmission fluid (18) for transmitting a displacement of the separating diaphragm (14) to the sensor diaphragm.

8. Pressure transducer according to Claim 7, **characterized in that** the separating diaphragm is a flush-front diaphragm which seals off the pressure transducer from the gauged substance with a flush face and no dead space on the pressure-connection side.

9. Pressure transducer according to Claim 7, **characterized in that** the separating diaphragm is a diaphragm (14) relocated into the interior of the casing so that the pressure-connection side of the pressure transducer casing forms a gauged-substance conduit (31)[*sic*] leading to the separating diaphragm.

10. Pressure transducer according to Claims 7, 8 or 9, **characterized in that** the sensor element is a piezoresistive sensor component (12).

11. Pressure transducer according to Claims 7, 8 or 9, **characterized in that** the sensor element is a thin-film sensor component.

12. Pressure transducer according to one or more of the preceding Claims 7 to 11,
**characterized in that** the sensor diaphragm is a circular diaphragm.

13. Pressure transducer according to one or more of the preceding Claims 7 to 11,
**characterized in that** the sensor diaphragm is a circular ring diaphragm.

14. Pressure transducer according to one or more of the preceding claims,
**characterized in that** the separating diaphragm (14) is a corrugated diaphragm.

15. Pressure transducer according to one or more of the preceding claims,
**characterized in that** the pressure transducer casing (2) also comprises signal conditioning electronics (5) and electrical connectors (4).

16. Pressure transmitter (30) with
a casing which carries a separating element (301) elastically deformable under pressure, whose one side faces a gauged substance and whose other side faces a space connectable to a gauge (32),
**characterized in that**
the space bounded by the pressure transmitter casing, separating element (301) and gauge (32) is filled with polyalphaolefin (PAO 6) as transmission fluid (18) to transmit a displacement of the separating element (301) to the gauge.

17. Pressure transmitter according to Claim 16, **characterized in that** the separating element is a diaphragm (301) fastened to the casing at its edge.

18. Pressure transmitter according to Claim 16 or Claim 17, **characterized in that** the separating element is a double-layer diaphragm fastened to the casing at its edge, with a screen insert arranged between its two layers.

19. Pressure transmitter according to one or more of the preceding Claims 16 to 18, **characterized in that** the separating element is a circular diaphragm.

20. Pressure transducer [*sic*] according to one or more of the preceding Claims 16 to 18, **characterized in that** the separating element is a circular ring diaphragm.

21. Pressure transducer [*sic*] according to one or more of the preceding Claims 16 to 18, **characterized in that** the separating element is a corrugated diaphragm.

22. Pressure transmitter according to one more more of the preceding claims 16 to 21, **characterized in that** the casing has a diaphragm bed to support the diaphragm.

## Revendications

1. Utilisation de polyalphaoléfine (PAO 6) comme liquide de transmission qui transmet la déviation d'un élément de séparation entre une substance de mesure et le liquide de transmission, à un dispositif de mesure de la pression, en particulier dans des transformateurs de pression électriques et transmetteurs de pression.

2. Utilisation de polyalphaoléfine (PAO 6) comme liquide de transmission selon la revendication 1, dans laquelle la viscosité du liquide de transmission est de 29,0 à 32, 9 mm²/s à 40°C et de 5,7 à 6,1 m²/s à 100°C.

3. Utilisation de polyalphaoléfine (PAO 6) comme liquide de transmission selon la revendication 1 ou 2, dans laquelle la densité du liquide de transmission à 15°C est de 810 à 840 kg/m³.

4. Utilisation de polyalphaoléfine (PAO 6) comme liquide de transmission selon la revendication 1, 2 ou 3, dans laquelle le point d'inflammation du liquide de transmission est au moins de 215°C.

5. Utilisation de polyalphaoléfine (PAO 6) comme liquide de transmission selon une ou plusieurs des revendications 1 à 4, dans laquelle le point de fluage du liquide de transmission est au moins de -60°C.

6. Utilisation de polyalphaoléfine (PAO 6) comme liquide de transmission selon une ou plusieurs des revendications 1 à 5, dans laquelle la teneur totale en acide du liquide de transmission est au maximum de 0,05 mg KOH/g.

7. Convertisseur de pression électrique comportant un élément de détection (1) placé dans un boîtier (10) qui convertit la déformation d'une membrane de détection, associé à l'élément (1), pour la mesure d'une pression régnant sur un raccord de pression (3), en un signal pouvant être détecté de manière électrique, et une membrane de séparation (14) qui délimite dans le boîtier (10) un volume (15, 21, 22, 31) fermé entre elle et la membrane de détection,
**caractérisé en ce que**
le volume fermé (15, 21, 22, 31) est rempli, pour la transmission d'une déviation de la membrane de séparation (14) à la membrane de détection, de polyalphaoléfine (PAO 6) comme liquide de transmission (18).

8. Convertisseur de pression selon la revendication 7, **caractérisé en ce que** la membrane de séparation est une membrane à fleur de la surface frontale qui ferme le convertisseur de pression sur le côté raccord de pression à fleur de la surface et sans espacement par rapport à la substance de mesure.

9. Convertisseur de pression selon la revendication 7, **caractérisé en ce que** la membrane de séparation est une membrane (14) décalée à l'intérieur du boîtier de manière que le côté raccord de pression du boîtier du convertisseur de pression réalise un canal de substance de mesure (31) menant à la membrane de séparation.

10. Convertisseur de pression selon la revendication 7, 8 ou 9, **caractérisé en ce que** l'élément de détection est un composant de détection (12) piézorésistif.

11. Convertisseur de pression selon la revendication 7, 8 ou 9, **caractérisé en ce que** l'élément de détection est un composant de détection à pellicule mince.

12. Convertisseur de pression selon une ou plusieurs des revendications 7 à 11 précédentes, **caractérisé en ce que** la membrane de détection est une membrane circulaire.

13. Convertisseur de pression selon une ou plusieurs des revendications 7 à 11 précédentes, **caractérisé en ce que** la membrane de détection est une membrane en anneau circulaire.

14. Convertisseur de pression selon une ou plusieurs des revendications précédentes, **caractérisé en ce que** la membrane de séparation (14) est une membrane ondulée.

15. Convertisseur de pression selon une ou plusieurs des revendications précédentes, **caractérisé en ce que** le boîtier (2) du convertisseur de pression comporte en outre une électronique de traitement de signaux (5) et des connecteurs électriques (4).

16. Transmetteur de pression (30) comportant un boîtier qui porte un élément de séparation (31) déformable élastiquement sous pression, dont une face est tournée vers une substance de mesure et dont l'autre face est tournée vers un volume qui peut être relié à un appareil de mesure (32), **caractérisé en ce que** le volume, limité par le boîtier du transmetteur de pression, l'élément de séparation (3, 101) et l'appareil de mesure (32), est rempli de polyalphaoléfine (PAO 6) comme liquide de transmission (18), afin de transmettre une déviation de l'élément de séparation (301) à l'appareil de mesure.

17. Transmetteur de pression selon la revendication 16, **caractérisé en ce que** l'élément de séparation est une membrane (301) fixée sur les bords au boîtier.

18. Transmetteur de pression selon la revendication 16 ou 17, **caractérisé en ce que** l'élément de séparation est une membrane à double couche, fixée sur les bords au boîtier, avec une garniture de tamisage disposée entre eux.

19. Transmetteur de pression selon une ou plusieurs des revendications 16 à 18 précédentes, **caractérisé en ce que** l'élément de séparation est une membrane circulaire.

20. Convertisseur de pression selon une ou plusieurs des revendications 16 à 18 précédentes, **caractérisé en ce que** l'élément de séparation est une membrane en anneau circulaire.

21. Convertisseur de pression selon une ou plusieurs des revendications 16 à 18 précédentes, **caractérisé en ce que** l'élément de séparation est une membrane ondulée.

22. Transmetteur de pression selon une ou plusieurs des revendications 16 à 21 précédentes, **caractérisé en ce que** le boîtier possède un lit pour membrane pour soutenir la membrane.
